# EUROPÄISCHE PATENTSCHRIFT

(11) **EP 0 413 952 B1**
(45) Veröffentlichungstag und Bekanntmachung des Hinweises auf die Patenterteilung: **14.09.1994**
(21) Anmeldenummer: 90113548.3
(22) Anmeldetag: 16.07.1990
(51) Int. Cl.: G01N 21/45, G01J 3/26

(54) **Interferometrisches Analysengerät**
Interferometric analyzer
Analyseur interférométrique

(30) Priorität: 03.08.1989 DE 3925692
(43) Veröffentlichungstag der Anmeldung: 27.02.1991
(73) Patentinhaber: Hartmann & Braun Aktiengesellschaft, 60484 Frankfurt am Main (DE)
(72) Erfinder: Zöchbauer, Michael, D-6370 Oberursel 1 (DE)
(74) Vertreter: Meissner, Peter E., Dipl.-Ing.

(56) Entgegenhaltungen:
- DE-A- 3 206 427
- DE-A- 3 612 733
- DE-A- 3 640 340
- DE-A- 3 812 334
- US-A- 4 455 089

## Beschreibung

Die Erfindung betrifft ein interferometrisches Analysengerät zum simultanen Nachweis mehrerer Substanzen nach dem Oberbegriff des Anspruchs 1.

In der DE OS 32 06 427 ist eine Meßeinrichtung für die optische Gasanalyse von n Komponenten eineß Gasgemisches beschrieben. Ein Ausführungsbeispiel zeigt die Erfassung von CO, SO₂ und H₂O. Hierzu wird das Verfahren des Wellenlängenvergleichs verwendet, wobei ein rotierendes Filterrad mit mehreren optischen Filtern zur Selektion der einzelnen Meßwellenlängen dient. Die am Detektor zeitmultiplex anstehenden Signale werden einer Rechenschaltung zugeführt, die die Extinktionen der einzelnen Komponenten errechnet. Die beschriebene Anordnung hat den Nachteil, daß sie nur eine geringe optische Selektivität aufweist. Alle störenden Absorptionen durch Begleitgase werden bei der jeweiligen Wellenlänge mit erfaßt und müssen rechnerisch durch die Lösung eines Gleichungssystems kompensiert werden. Die Rechnung liefert nur dann exakte Ergebnisse, wenn das Lambert-Beersche Absorptionsgesetz uneingeschränkt gilt. Dies ist in der Praxis jedoch nicht der Fall. Probleme ergeben sich, wenn die Begleitgaskonzentrationen stärkeren Schwankungen unterliegen, so daß sich die Abweichungen vom Lambert-Beerschen Gesetz bemerkbar machen.

In der DE OS 36 25 490 ist ein Multikomponenten-Prozeßanalysensystem beschrieben, das für die spektrale Zerlegung eine dispergierende Optik (Gittermonochromator) verwendet. Derartige Anordnungen benutzen als abbildendes Element einen Spalt und sind daher intensitätsschwach. Weiterhin ist es zur Kompensation störender Begleitgasabsorptionen notwendig, mehr oder weniger komplexe Gleichungssysteme zu lösen.

Eine weitere Vorrichtung zur Bestimmung mehrerer Komponenten eines Abgasgemisches wird in der DE OS 25 59 806 beschrieben. Auch hier wird zur spektralen Zerlegung ein Filterrad mit anschließender Korrekturrechnung verwendet, so daß die genannten Nachteile zu erwarten sind.

Ebenfalls ein Mehrkomponenten-Analysengerät stellte die Fa. Elf Aquitaine vor (Prospekt "Gas analyzer using optical interferometry" der Fa. Elf Aquitaine, Tour-Elf-Cedex 45, Paris). Dort wird zum Nachweis mehrerer Substanzen mit einer charakteristischen optischen Wegdifferenz eine Anordnung verwendet, die folgende Elemente umfaßt:
ein Wollaston-Prisma als Polarisator, einen photoelektrischen Modulator, ein doppelbrechendes Plättchen, dessen Dioke gleich der charakteristischen Wegdifferenz der Substanz(en) ist, ein zweites Wollaston-Prisma als Analysator sowie als dispergierendes Element ein holographisches Gitter mit mehreren zugeordneten Detektorelementen. Für die Gasanalyse im Infrarotbereich, z.B. für die Simultanmessung von CO, NO und SO₂ stehen jedoch keine gängigen doppelbrechenden Materialien mit genügender Transmission zur Verfügung, so daß die beschriebene Einrichtung hierfür nicht anwendbar ist.

Der Erfindung liegt die Aufgabe zugrunde, ein interferometrisches Analysengerät nach dem Oberbegriff des Anspruchs 1 zu schaffen, das es ermöglicht, Moleküle mit strukturiertem, insbesondere periodischem oder quasiperiodischem Absorptionsspektrum hochselektiv zu erfassen und das gleichzeitig die genannten Nachteile nicht mehr aufweist. Die Lösung der Aufgabe erfolgt erfindungsgemäß durch die Merkmale des kennzeichnenden Teils des Ansprüches 1.

Das erfindungsgemäße interferometrische Analysengerät zum Nachweis mehrerer Substanzen mit strukturiertem, insbesondere periodischem oder quasiperiodischem Absorptionsspektrum, benutzt - wie in den älteren Anmeldungen P 38 12 334 und P 39 23 831 bereits beschrieben - ein elektrisch bzw. thermisch abstimmbares Fabry-Perot-Element, dessen Dicke so gewählt wird, daß der Abstand der erzeugten Interferenzlinien dem Abstand der Absorptionslinien der zu bestimmenden Substanz entspricht. Das Fabry-Perot-Element kann je nach Ausführung eine Platte aus elektrooptisch oder thermooptisch aktivem Material oder eine mit doppelbrechenden Flüssigkristallen gefüllte Zelle sein. Die Modulation erfolgt je nach Ausführung durch Anlegen einer Spannung an die teildurchlässig verspiegelten Stirnseiten der Platte bzw. der Zelle oder durch Änderung der Temperatur der Platte. Das interferometrische Analysengerät nutzt den Umstand aus, daß bestimmte Moleküle einen fast identischen Abstand der periodischen Absorptionslinien aufweisen. Dies ist z.B. im IR-Bereich für die Moleküle CO, NO und SO₂ der Fall, wenn man die Schwingungs-Rotations-Banden dieser Moleküle bei 2144 cm-1, 1887 cm-1 bzw. 1151 cm-1 betrachtet. Im Bandenzentrum ergeben sich Rotationslinienabstände von 3,8 cm-1 für CO, 3,4 cm-1 für NO bzw. 4,0 cm-1 für SO₂. Da auf Grund der Anharmonizität die Rotationslinien innerhalb einer Schwingungs-Rotations-Bande nicht äquidistant sind, sondern der Abstand mit zunehmender Wellenzahl abnimmt, läßt sich für jedes Molekül ein bestimmter Wellenzahlbereich finden, so daß der Abstand der Rotationslinien für alle drei Moleküle gleich ist. Das bedeutet, daß für die selektive, simultane Erfassung dieser Moleküle nur ein einziges abstimmbares Fabry-Perot-Element benötigt wird. Zur Unterscheidung der Moleküle ist es lediglich notwendig, die Messung durch geeignete Filter auf den jeweils interessierenden Spektralbereich zu beschränken. Dies kann z.B. durch ein Interferenz-Verlauffilter erfolgen.

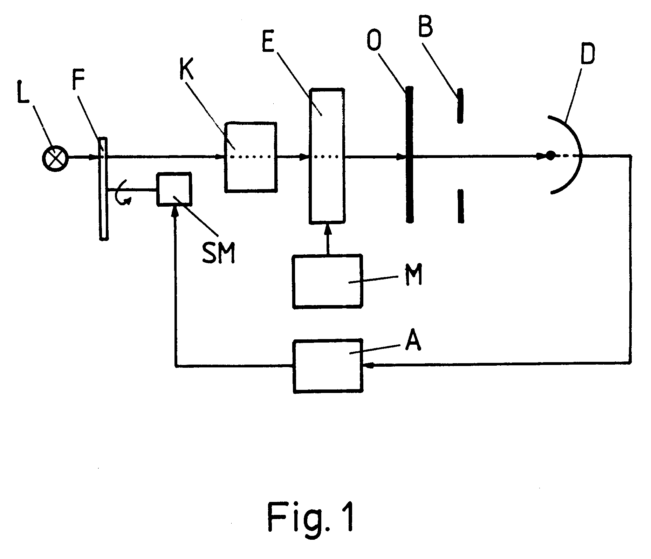

Im folgenden wird anhand der Figur 1 ein Ausführungsbeispiel der Erfindung näher erläutert.

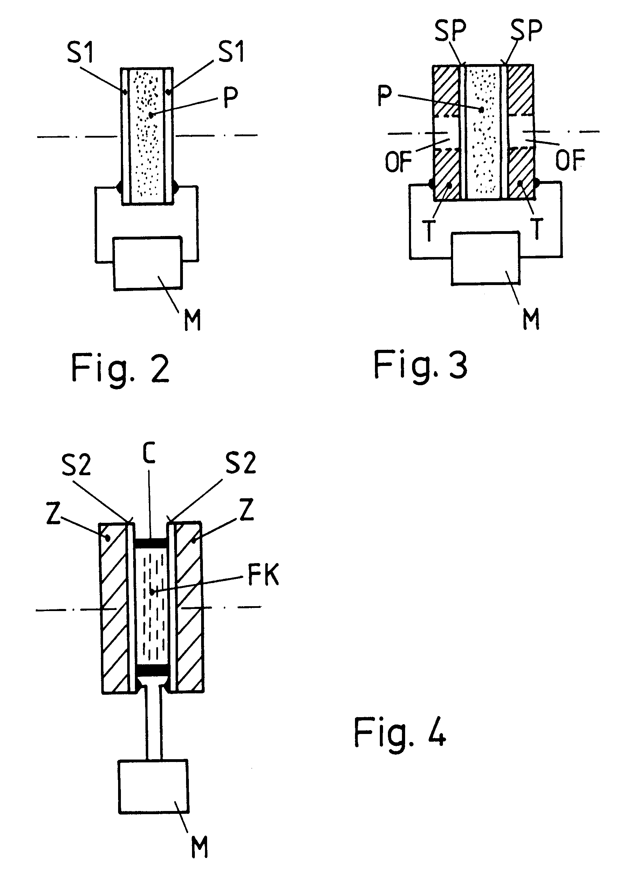

Das von einer Strahlungsquelle L kommende breitbandige Licht wird von einem rotierenden Verlauffilter F zunächst auf den interessierenden Spektralbereich begrenzt. Der Antrieb des Verlauffilters F erfolgt durch einen Schrittmotor SM. Mit Hilfe einer Elektronik A wird der Schrittmotor SM so gesteuert, daß die einzelnen Komponenten im jeweils interessierenden Spektralbereich erfaßt werden können. Im Strahlengang folgt anschließend die Meßstrecke K mit dem zu untersuchenden Substanzgemisch. Die Meßstrecke K kann eine Küvette oder auch ein direkt durchstrahlter Schornstein sein. Hinter der Meßstrecke ist das abstimmbare Fabry-Perot-Element E angeordnet, das entweder aus einer elektrooptisch aktiven Platte, einer thermooptisch aktiven Platte oder aus einer mit Flüssigkristallen gefüllten Zelle besteht. Die einzelnen Varianten des Elementes E werden an Hand der Detailzeichnungen Fig. 2, 3 und 4 näher beschrieben.

Die Modulationseinheit M sorgt je nach Ausführung für die elektrooptißche bzw. thermooptißche Modulation der vom Fabry-Perot-Element E erzeugten Interferenzlinien. Dem abstimmbaren Fabry-Perot-Element E nachgeschaltet ist ein Objektiv O. Durch eine Blende B kann der interferometrische Auswertebereich auf einen mittleren Bereich in der Nähe der optischen Achse beschränkt werden. Die durch die Blende hindurchgehende Strahlung wird vom Detektor D erfaßt und in ein elektrisches Signal umgesetzt. Mit Hilfe der Elektronik A erfolgt die Signalauswertung und Konzentrationsberechnung für die einzelnen Meßkomponenten durch entsprechende Synchronisation mit dem Schrittmotorantrieb des Verlauffilters F.

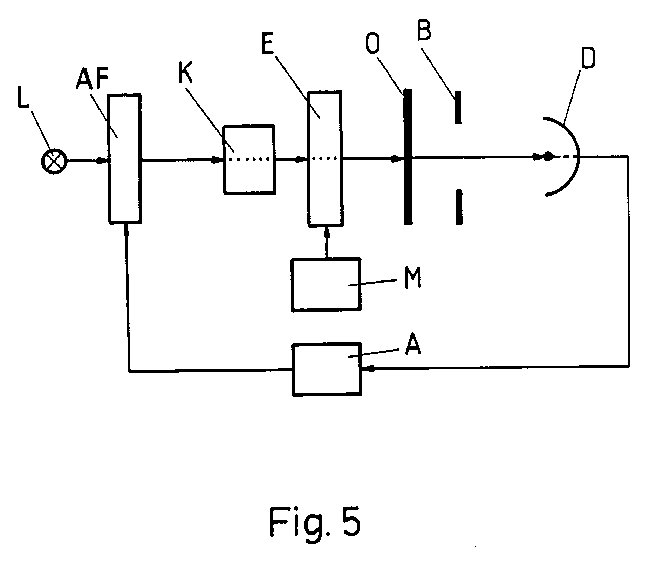

Die Figuren Fig. 2 bis 4 zeigen verschiedene Außführungsbeispiele des abstimmbaren Fabry-Perot-Elements E. Figur 5 zeigt ein Ausführungsbeispiel mit einem Fabry-Perot-Filter als dispergierendes Element.

In Fig. 2 ist eine elektrooptische Variante abgebildet. Die Platte P besteht aus einem elektrooptischen Material, z.B. Lithiumniobat, auf das beidseitig transparente Elektroden S1 aufgebracht sind. Die Elektroden S1 können gleichzeitig als teildurchlässiger Spiegel fungieren, wobei sich über den Verspiegelungsgrad die Halbwertsbreite der Interferenzlinien einstellen läßt. An die Elektroden S1 wird eine von der Modulationseinheit M erzeugte Steuerspannung angelegt, mit der sich die Durchlaßcharakteristik des Elements E variieren läßt.

Fig. 3 zeigt eine thermooptische Variante. Die Platte P besteht aus einem Material mit möglichst großer Temperaturabhängigkeit des optischen Produkts (Dicke x Brechungsindex), z. B. Silizium oder Zinkselenid. Zur Temperatureinstellung der Platte P sind beidseitig Peltierelemente T angebracht, die in der Umgebung der optischen Achse Öffnungen OF für das Licht der Strahlenquelle L freilassen. Die Steuerung der Heiz- bzw. Kühlzyklen erfolgt mit Hilfe der Modulationseinheit M. Zur Verringerung der Halbwertsbreite der Interferenzlinien sind auf die Stirnflächen der Platte P teildurchlässige Spiegel SP aufgebracht.

Fig. 4 zeigt eine weitere Variante des abstimmbaren Fabry-Perot-Elements E, das als Flüssigkristall-Zelle ausgeführt ist. Die Zelle besteht aus den Fenstern Z, die auf der Innenseite die transparenten Elektroden S2 aufweisen. Ein Spacer C definiert den Abstand der Zellenfenster und damit die Zellendicke. Die Zelle ist mit Flüssigkristallmaterial FK gefüllt. Die Modulationseinheit M erzeugt die Steuerspannung zur Verschiebung der Durchlaßcharakteristik des Fabry-Perot-Elements E. Die Elektroden S2 können gleichzeitig als teildurchlässige Spiegel ausgebildet sein, mit denen sich die Halbwertsbreite der Interferenzlinien einstellen läßt.

Anstelle des Verlauffilters F kann auch ein breitbandiges abstimmbares Fabry-Perot-Filter AF als dispergierendes Element eingesetzt werden. Figur 5 zeigt eine derartige Anordnung. Das abstimmbare Element kann z. B. eine Flüssigkristall-Zelle sein, wie sie anhand der Figur 4 beschrieben wurde. Die Zellendicke des abstimmbaren Filters ist hierbei so zu wählen, daß ein Interferenzmuster mit möglichst großem Abstand der Interferenzlinien entsteht. Dies wird erreicht, indem die Zellendioke des Fabry-Perot-Filters AF auf wenige Micrometer eingestellt wird. Die Steuerung des Filters AF erfolgt durch die Elektronik A derart, daß die einzelnen Meßkomponenten im jeweils interessierenden Spektralbereich erfaßt werden können.

## Patentansprüche

1. Interferometrisches Analysengerät zum Nachweis mehrerer Substanzen mit strukturiertem, insbesondere periodischem oder quasiperiodischem Absorptionsspektrum in einem Substanzgemisch mit einer Strahlungsquelle (L), in deren Strahlengang das zu untersuchende Substanzgemisch, ein einziges elektrooptisch oder thermooptisch abstimmbares Fabry-Pero-Element (E), dessen Dicke den Abstand der Interferenzlinien bestimmt und so gewählt wird, daß der sich daraus ergebende Abstand der Interferenzlinien dem Abstand der Absorptionslinien mehrerer Substanzen in ausgewählten Spektralbereichen entspricht, ein dispergierendes Element für die Auswahl eines für die jeweilige Substanzkomponente infragekommenden Spektralbereiches aus mehreren Spektralberichen, und ein Detektor (D) angeordnet sind.

2. Interferometrisches Analysengerät nach Anspruch 1,
**dadurch gekennzeichnet**,
daß das Fabry-Perot-Element(E) eine Platte (P) aus elektrooptischem Material ist, auf das teildurchlässig verspiegelte Elektroden (S1) aufgebracht sind.

3. Interferometrisches Analysengerät nach Anspruch 1,
**dadurch gekennzeichnet,**
den das Fabry-Perot-Element (E) eine mit Flüssigkristallen (FK) gefüllte Zelle (Z, C) ist, deren Stirnflächen lichtdurchlässige Elektroden (S2) aufweisen.

4. Interferometrisches Analysengerät nach Anspruch 1,
**dadurch gekennzeichnet**,
daß das Fabry-Perot-Element (E) eine Platte (P) aus thermooptisch aktivem Material ist, auf deren Stirnflächen teildurchlässige Spiegel (SP) aufgebracht sind.

5. Interferometrisches Analysengerät nach einem oder mehreren der Ansprüche 1 bis 4, dadurch gekennzeichnet, daß das dispergierende Element ein rotierendes Verlauffilter (F) ist.

6. Interferometrisches Analysengerät nach einem oder mehreren der Ansprüche 1 bis 4, dadurch gekennzeichnet, daß das dispergierende Element ein breitbandiges abstimmbares Fabry-Perot-Element (AF) ist.

7. Interferometrisches Analysengerät nach einem oder mehreren der Ansprüche 1 bis 6, dadurch gekennzeichnet, daß die gleichzeitig erfaßbaren Substanzen CO, NO und SO₂ sind.

## Claims

1. An interferometric analyzer for detecting a plurality of substances with structured, especially periodic or quasi-periodic absorption spectrum in a substance mixture with a radiation source (L), in whose ray path there are arranged the substance mixture to be examined, a single electrooptically or thermooptically tunable Fabry-Perot element (E) whose thickness determines the spacing of the interference lines and is such that the spacing of the interference lines resulting therefrom corresponds to the spacing of the absorption lines of a plurality of substances in selected spectral ranges, a dispersing element for the selection from a plurality of spectral ranges of one possible spectral range for the respective substance component, and a detector (D).

2. An interferometric analyzer according to claim 1, characterized in that the Fabry-Perot element (E) is a plate (P) of electrooptic material, to which the partially permeably silvered electrodes (S1) are applied.

3. An interferometric analyzer according to claim 1, characterized in that the Fabry-Perot element (E) is a cell (Z, C) filled with liquid crystals (FK), the ends of which cell (Z, C) comprise light-permeable electrodes (S2).

4. An interferometric analyzer according to claim 1, characterized in that the Fabry-Perot element (E) is a plate (P) of thermooptically active material, to the ends of which are applied partially permeable mirrors (SP).

5. An interferometric analyzer according to any one of claims 1 to 4, characterized in that the dispersing element is a rotating graduated filter (F).

6. An interferometric analyzer according to any one of claims 1 to 4, characterized in that the dispersing element is a broad-band tunable Fabry-Perot element (AF).

7. An interferometric analyzer according to any one of claims 1 to 6, characterized in that the simultaneously detectable substances are CO, NO and SO₂.

## Revendications

1. Appareil d'analyse interférométrique pour déceler plusieurs substances avec un spectre d'absorption structuré, en particulier périodique ou quasipériodique, dans un mélange de substances, comportant une source de rayonnement (L), dans la marche du rayonnement de laquelle sont montés le mélange de substances à analyser, un unique élément de Pérot-Fabry (E) accordable électro-optiquement ou thermo-optiquement, dont l'épaisseur détermine l'écartement des lignes d'interférence et est choisie de manière que l'écartement des lignes d'interférence ainsi obtenu corresponde à l'écartement des lignes d'absorption de plusieurs substances dans des zones spectrales sélectionnées, un élément de dispersion pour sélectionner, à partir de plusieurs zones spectrales, une zone spectrale à prendre en compte pour la composante de substance correspondante, et un détecteur (D).

2. Appareil d'analyse interférométrique selon la revendication 1,
caractérisé en ce que l'élément de Pérot-Fabry (E) est une plaque (P) en un matériau électro-optique, sur lequel sont montées des électrodes (S1) à argenture semi-transparente.

3. Appareil d'analyse interférométrique selon la revendication 1,
caractérisé en ce que l'élément de Pérot-Fabry (E) est une cellule (Z, C) remplie de cristaux liquides, dont les faces frontales comportent des électrodes transparentes (S2).

4. Appareil d'analyse interférométrique selon la revendication 1,
caractérisé en ce que l'élément de Pérot-Fabry (E) est une plaque (P) en un matériau actif thermo-optiquement, sur les faces frontales duquel sont montés des miroirs (SP) à argenture semi-transparente.

5. Appareil d'analyse interférométrique selon l'une ou plusieurs des revendications 1 à 4,
caractérisé en ce que l'élément de dispersion est un filtre dégradé rotatif (E).

6. Appareil d'analyse interférométrique selon l'une ou plusieurs des revendications 1 à 4,
caractérisé en ce que l'élément de dispersion est un élément de Pérot-Fabry (AF) accordable à large bande.

7. Appareil d'analyse interférométrique selon l'une ou plusieurs des revendications 1 à 6,
caractérisé en ce que les substances détectables simultanément sont CO, NO et SO₂.
